# EUROPEAN PATENT APPLICATION

(11) **EP 4 711 407 A1**
(43) Date of publication of application: **18.03.2026**
(21) Application number: 24200535.3
(22) Date of filing: 16.09.2024
(51) Int. Cl.: C08J 11/12, C08F 8/50, C08L 23/26

(54) **VISBREAKING FOR CROSSLINKED HIGH DENSITY POLYETHYLENE**

(71) Applicant: Basell Polyolefine GmbH, 50389 Wesseling (DE)
(72) Inventor: RIEMMA, Antonio, 44122 Ferrara (IT); MANNEBACH, Gerd, 65926 Frankfurt/M. (DE); SCHNEIDER, Martin, 65926 Frankfurt/M. (DE); BODACH, Alexander, 65926 Frankfurt/M. (DE); PFEIFFER, Maximilian, 65926 Frankfurt/M. (DE)
(74) Representative: LyondellBasell

(57) **Abstract**

A process for visbreaking of crosslinked high density polyethylene, to obtain a visbroken polyethylene, derived from post consumer and post industrial waste applications, such as pipes, to obtain visbroken polyethylene recyclate which is suitable for application in further high quality applications, such as blended with virgin material for pipe applications. The visbroken crosslinked polyethylene is further processed and used when blended or compounded with a virgin high melt polyethylene component in an amount of at least 50 wt% based on the overall wight of the composition, to obtain a composition which suitably can be used for applications in pipe applications, such as floor heating and the like.

## Description

### BACKGROUND INFORMATION

Visbreaking of crosslinked polyethylene materials is a crucial process in the plastics industry, particularly for reduction of plastic waste such as crosslinked PE materials, as they are widely used for various applications due to their excellent mechanical properties, chemical resistance, and thermal stability. However, in certain instances, it becomes necessary to visbreak or partially degrade the polymer chains of crosslinked PE material, if not possible there is no way to recycle this material, as it does not melt using normal extrusion processes.

Crosslinked polyethylene (PEX) is produced using crosslinking agents, such as peroxide, the silane method, using radiation, or application of azo-compounds. By connecting the linear polyethylene chains via crosslinking improves the material's mechanical properties.

Non-crosslinked polyethylene can be recycled and re-used by mechanical processes and by thermal induced melting of the polyolefins, so re-using the waste for new applications is possible. Crosslinked material requires a different treatment, as crosslinked polyethylene cannot undergo melting, due to its typical structure of inter-chain bonds and for this reason it cannot be reprocessed and recycled via standard mechanical recycling processes.

To reduce the huge amounts of crosslinked waste, such as pipes, there is a strong need to provide a process to recycled via visbreaking, e.g., the crosslinking material and provide visbroken material with suitable properties which can be used in further applications.

### SUMMARY OF INVENTION

In order to overcome this problem, a visbroken crosslinked polyethylene is disclosed and a process to obtain a processable visbroken polyethylene recyclate.

Object of the present disclosure is to provide a process to provide visbroken polyethylene recyclate having a lower molecular weight and higher melt flow rate compared to the starting material. The process for visbreaking the crosslinked structure of a polyolefin recyclate comprising thermal and mechanical visbreaking steps, using at least one extruder, to visbreak a polyethylene recyclate derived from crosslinked polyethylene pipe material, which contains a mixture of crosslinked polyethylene, by subjecting the polyolefin recyclate to high temperature and high pressure conditions, and applying a thermal treatment at temperatures greater than or equal to 300 °C. This innovative approach not only improves the melt flow rate of the crosslinked polyethylene recyclate, but also enhances the mechanical properties of the recycled polyolefin composition, making it suitable for various high-performance applications. The process herein disclosed provides a practical and effective solution for re-using and recycling of crosslinked polyethylene. Using a thermal and mechanical treatment, the visbreaking process breaks the crosslinking bonds in the linear polyethylene chains and significantly enhances the quality and usability of crosslinked polyethylene recyclates, thereby contributing to more sustainable and efficient recycling practices.

By applying thermal and mechanical visbreaking conditions the visbroken high density polyethylene recyclate is obtained, being suitable for blending with a high melt flow high density polyethylene component of virgin origin to be applied in further pipe applications, and good processability.

A visbreaking process for obtaining a visbroken polyethylene comprising the steps of
a) Providing crosslinked polyethylene recyclate,
b) Applying thermal and mechanical visbreaking conditions to the crosslinked polyethylene, in at least one extruder,
c) Adding a specific energy in a range from 0.50 to 0.60 kW/kg, preferably from 0.53 to 0.58 kW/kg, preferably from 0.54 to 0.56 kW/kg,
d) Obtaining the visbroken polyethylene recyclate.

The process is further characterized in that, the thermal and mechanical visbreaking conditions comprise a thermal treatment at a temperature in the range from 250 to 400°C, preferably from 280 to 350°C, preferably from 300 to 350°C.

The visbreaking process is preferably described in that, the thermal and mechanical visbreaking conditions comprise a screw speed in the at least one extruder in a range from 200 to 800 rpm, preferably from 350 to 750 rpm, preferably from 450 to 550 rpm.

The visbreaking process, wherein optionally the process comprises a degassing step of the crosslinked polyethylene recyclate and/or the visbroken polyethylene recyclate.

In the visbrekaing process, as crosslinked polyethylene recyclate source, a material having the following properties is used. The crosslinked polyethylene recyclate used in the visbreaking process is having
I. a density in the range from 0.940 to 0.965 g/cm³, preferably from 0.945 to 0.960 g/cm³, preferably from 0.950 to 0.955 g/cm³ (according to ISO 1183),
II. a MI2 in the range from 0.10 to 3.0 g/10 min, preferably from 0.15 to 3.0 g/10 min, preferably from 0.20 to 1.0 g/10min (according to ISO 1133, 190°C, 2.16 kg).

The visbreaking process, wherein the crosslinked polyethylene recyclate is comprising
a) a crosslinked high density polyethylene recyclate, present in an amount in a range from 50 to 100 wt%, preferably from 85 to 98 wt%, preferably from 90 to 95 wt%,
b) a polypropylene in an amount present in a range of 1.0 to 10.0 wt%, preferably 2.0 to 7.0 wt%, preferably 3.0 to 5.0 wt%,
c) wherein components a) and b) sum up to 100 %,
d) optionally comprising a component c).

The visbroken recyclate can also comprise residues derived from post consumer waste, such as impurities or traces and amounts of other first-life use, such as addiditves, other polymers, or polyethylene having a lower density, polypropylene or polyethylene terephthalate, polyamide, polyurethane, polycarbonate, polyvinylchloride, polystyrene, and also paper, metal, or other remains from pre-recycling applications.

The visbreaking process, wherein the crosslinked polyethylene recyclate is used, having
a) a density in the range from 0.950 to 0.965 g/cm3, preferably in the range from 0.952 to 0.962 g/cm3, preferably in the range from 0.955 to 0.960 g/cm³,
b) a MI2 in the range from 1.0 to 15.0 g/10 min, preferably from 1.5 to 10.0 g/10 min, preferably from 3.0 to 8.0 g/10 min,
c) a Mw in a range from 70,000 to 150,000 g/mol, preferably from 85.000 to 125.000 g/mol, preferably from 95,000 to 100,000 g/mol,
d) the ratio Mw/Mn in the range from 1 to 10, preferably in the range from 3 to 7, preferably in the range from 4 to 6.

Further a method for making a visbroken polyethylene composition is disclosed, comprising the steps of:
i.Visbreaking a crosslinked recyclate polyethylene to produce a visbroken polyethylene composition, wherein the visbroken polyethylene composition comprises:
ii.ln the range from 50 to 100 wt. %, preferably in the range from 60 to 98 wt.%, preferably in the range from 70 to 95 wt.% based on the total weight of the visbroken composition, of the crosslinked recyclate polyethylene, and wherein the crosslinked recyclate polyethylene has:
   a) a density in the range from 0.950 to 0.965 g/cm³ (according to ISO 1183),
   b) a MI2 in the range from 1.0 to 15.0 g/10 min (according to ISO 1133, 190°C, 2.16 kg),
   c) a Mw in a range from 70,000 to 150,000 g/mol,
   d) the ratio Mw/Mn in the range from 1 to 10; and
iii.in the range from 70 to 95 wt. %, preferably in the range from 75 to 90 wt.%, preferably 80 to 85 wt.% based on the total weight of the visbroken composition, of a visbroken polyethylene component, wherein the visbroken polyethylene component is derived from the crosslinked recyclate polyethylene, wherein the visbroken polyethylene component has:
   a) a density in the range from 0.950 to 0.965 g/cm³, preferably in the range from 0.952 to 0.962 g/cm3, preferably in the range from 0.955 to 0.960 g/cm3, (according to ISO 1183),
   b) an intrinsic viscosity in the range from 0.8 to 2.0 dL/g, preferably in the range from 1.0 to 1.5 dL/g, preferably in the range from 1.1 to 1.2 dL/g (according to ISO 1628-1:2009),
   c) a MI2 in the range from 1.0 to 15.0 g/10 min preferably in the range from 1.5 to 10.0 g/10 min, preferably in the range from 3.0 to 8.0 g/10 min (according to ISO 1133, 190°C, 2.16 kg),
   d) a Mw in the range from 70,000 to 150,000 g/mol, preferably in the range from 85.000 to 125.000 g/mol, preferably in the range from 95,000 to 100,000 g/mol (according to ISO 16014),
   e) a Mw/Mn in the range from 1 to 10.

The method as described before, lowers the melt flow rate of the visbroken material, as the crosslinking bonds in the polymer chains are deconstructed, resulting in shorter chains.

The crosslinked polyethylene recyclate, wherein the crosslinked high density polyethylene is obtained from post consumer and post industrial waste.

The crosslinked polyethylene recyclate is preferably derived from pipe applications, where mainly due to mechanical stability and resistance a crosslinked polyethylene, which is preferably a homopolymer is applied.

The visbroken polyethylene recyclate, having
I. a density in the range from 0.950 to 0.965 g/cm3, preferably in the range from 0.952 to 0.962 g/cm3, preferably in the range from 0.955 to 0.960 g/cm3 (according to ISO 1183),
II. an intrinsic viscosity in the range from 0.8 to 2.0 dL/g, preferably in the range from 1.0 to 1.5 dL/g, preferably in the range from 1.1 to 1.2 dL/g (according to ISO 1628-1:2009),
III. a MI2 in the range from 1.0 to 15.0 g/10 min, preferably in the range from 1.5 to 10.0 g/10 min, preferably in the range from 3.0 to 8.0 g/10 min (according to ISO 1133, 190°C, 2.16 kg),
IV. a Mw in a range from 70,000 to 150,000 g/mol, preferably in the range from 85.000 to 125.000 g/mol, preferably in the range from 95,000 to 100,000 g/mol (according to ISO 16014),
V. a Mw/Mn in the range from 1 to 10, preferably in the range from 2 to 8, preferably in the range from 4 to 6.

The visbroken polyethylene recyclate is having a lower molecular weight after being subjected to visbreaking conditions, as it can be seen from the Table 1, shown in all Samples 1 to 3.

The composition obtained by a method of making such composition, comprising:
a) 50 to 100 wt. %, based on the total weight of the composition, of a crosslinked recyclate polyethylene having:
   i. a density in the range from 0.950 to 0.965 g/cm³ (according to ISO 1183),
   ii. an intrinsic viscosity in the range from 0.8 to 2.0 dL/g,
   iii. a MI2 in the range from 1.0 to 15.0 g/10 min (according to ISO 1133, 190°C, 2.16 kg),
   iv. a Mw in the range from 70,000 to 150,000 g/mol (according to ISO 16014),
   v. a Mw/Mn in the range from 1 to 10.
b) 30 to 95 wt. %, based on the total weight of the composition, of a visbroken polyethylene that is derived from the crosslinked recyclate polyethylene having:
   i.a density in the range from 0.950 to 0.965 g/cm³ (according to ISO 1183),
   ii.a MI2 in the range from 1.0 to 15.0 g/10 min (according to ISO 1133, 190°C, 2.16 kg),
   iii.a Mw in a range from 70,000 to 150,000 g/mol,
   iv.the ratio Mw/Mn in the range from 1 to 10.

Composition, comprising a blend or compound of the visbroken polyethylene recyclate obtainable by the process disclosed herein and a polyethylene of virgin origin, preferably a high density polyethylene of virgin origin, wherein
a) the visbroken crosslinked polyethylene recyclate, according to any of the preceding claims, present in an amount in the range from 30 to 70 wt%, preferably in the range from 40 to 60 wt%, preferably in the range from 50 to 55 wt%, and
b) a polyethylene of virgin origin, present in an amount in the range from 70 to 30 wt%, preferably in the range from 60 to 40 wt%, preferably in the range from 50 to 55 wt%,
c) and optionally additives, such as UV stabilizers and the like present in an amount in the range from 0 to 10 wt%, preferably in the range from 1 to 8 wt%, preferably in the range from 3 to 5 wt%,
based on the overall composition.

The composition comprising the visbroken polyethylene recyclate and a polyethylene of virgin origin used as a second component is having
I. a density in a range from 0.935 to 0.970 g/cm³, preferably from 0.940 to 0.968 g/cm³, preferably 0.945 to 0.965 g/cm³,
II. an intrinsic viscosity in a range from 1.0 to 5.0 dL/g, preferably 1.1 to 4.5 dL/g, preferably 1.2 to 3.7 dL/g,
III. a ratio of Mw/Mn in a range from 5 to 40, preferably from 8 to 35, preferably from 10 to 30.

The polyethylene of virgin origin is a copolymer or homopolymer of ethylene and at least one of hexene, butene or octene, preferably a high density polyethylene, having
I. a density in the range from 0.935 to 0.970 g/cm³, preferably in the range from 0.940 to 0.960 g/mol, preferably in the range from 0.945 to 0.965 g/mol, preferably in the range from 0.950 to 0.955 g/mol,
II. an intrinsic viscosity in the range from 1.0 to 5.0 dL/g, preferably in the range from 1.1 to 4.0 dL/g, preferably in the range from 1.2 to 3.7 dL/g,
III. a ratio of Mw/Mn in the range from 5 to 40, preferably in the range from 8 to 35, preferably in the range from 10 to 30.

The polyethylene of virgin origin can be derived from any process, which leads to a polyethylene having suitable properties for being blended into the visbroken polyethylene recyclate. Preferably, the virgin component is having a higher molecular weight distribution than the visbroken polyethylene recyclate.

The composition, comprising the visbroken polyethylene recyclate and the polyethylene of virgin origin is having
I. a density in the range from 0.915 to 0.950 g/cm³, preferably in the range from 0.925 to 0.945 g/cm³, preferably in the range from 0.935 to 0.940 g/cm³ (according to Iso 1183),
II. an intrinsic viscosity in the range from 1.0 to 10.0 dL/g, preferably in the range from 3.5 to 9 dL/g, preferably in the range from 5.5 to 7.5 dL/g (according to ISO 1628-3),
III. is a copolymer, of ethylene and 1-hexene, 1-butene or 1-octen, preferably 1-hexene and 1-buten, preferably 1-butene,
IV. a ratio of Mw/Mn in the range from 5.0 to 15.0, preferably in the range from 6.0 to 12.0, preferably in the range from 7.0 to 10.0.

The composition according to the invention further is having a Mw, measured by GPC in the range from 50,000 to 150,000 g/mol, preferably in the range from 70,000 to 130,000 g/mol, preferably in the range from 73,000 to 125.000 g/mol measured with GPC.

The composition further has a Mn in the range from 10,000 to 30,000 g/mol, preferably in the range from 12,000 to 25,000 g/mol, preferably in the range from 15,000 to 21,000 g/mol (measured with GPC).

Further the composition is having a Mz in the range from 100,000 to 500,000 g/mol, preferably in the range from 200,000 to 450,000 g/mol, preferably in the range from 40,000 g/mol, preferably in the range from 240,000 to 430,000 g/mol (measured with GPC).

To achieve high quality properties in applications, the obtained visbroken polyethylene recyclate may be blended with virgin polyethylene material.

A Composition, comprising a blend or compound of
a) the visbroken crosslinked polyethylene recyclate, according to any of the preceding claims, present in an amount in the range from 30 to 70 wt%, and
b) at least one polyethylene of virgin origin, present in an amount in the range from 70 to 30 wt%,
c) and optionally additives, such as UV stabilizers and the like present in an amount in the range from 0 to 10 wt%, based on the overall composition.

The composition comprises beside visbroken crosslinked polyethylene material also residues from first life application, such as additives, carbon black, residues from per- and polyfluoroalkyl substances and other volatile or non-volatile substances. Further also contaminants such as PP, or polystyrene and the like.

Therefore, the final composition, comprising a blend of visbroken polyethylene recyclate and virgin polyethylene is further having
I. a density in the range from 0.925 to 0.970 g/cm³, preferably in the range from 0.935 to 0.968 g/cm³, preferably in the range from 0.945 to 0.965 g/cm³ (according to ISO 1183),
II. an intrinsic viscosity in the range from 1.0 to 5.0 dL/g, preferably in the range from 1.1 to 4.5 dL/g, preferably in the range from 1.2 to 3.7 dL/g (according to ISO 1628-3),
III. a ratio of Mw/Mn in the range from 5 to 40, preferably in the range from 8 to 35, preferably in the range from 10 to 30.

Depending on the blend, chosen for mixing the obtained visbroken polyethylene recyclate with virgin polyethylene, in Table 3 are Samples given, which ae suitably are blended together.

The intrinsic viscosity value of the obtained composition is an important parameter for polyethylene as it provides information about the polymer's molecular weight. Higher intrinsic viscosity indicates higher molecular weight, which generally correlates with better mechanical properties such as strength and toughness. Conversely, lower intrinsic viscosity suggests lower molecular weight, which can result in easier processing but potentially lower mechanical performance.

The composition, defined by the following properties, wherein the polyethylene of virgin origin is having
I. a density in the range from 0.920 to 0.965 g/cm³, preferably in the range from 0.925 to 0.962 g/cm³ (according to ISO 1183),
II. an intrinsic viscosity in the range from 1.0 to 10.0 dL/g,
III. is a co-polymer, of ethylene and 1-hexene, 1-butene or 1-octen,
IV. a ratio of Mw/Mn in the range from 5.0 to 15.0.

Use of the composition for pipe applications, used for crosslinking applications again, crosslinked or non crosslinked for floor heating and hot water systems.

Further is an article disclosed comprising the composition. The composition is suitable for further extrusion, can be applied in further pipe applications.

In order to illustrate the disclosure more clearly, the following examples are given explaining the preferred modes of carrying it into effect and the advantageous results obtained thereby. The use of examples does not limit the scope and meaning of the disclosure or of any exemplified term. Likewise, the disclosure is not limited to various embodiments given in this specification.

The visbroken polyethylene recyclate is obtainable by the process as described before. Having a lower MI2 shows removed crosslinking in the molecular structure, which can be seen in a change of the features measured.

A method to measure the crosslinking degree is Differential Scanning Calorimetry (DSC). This technique measures the heat flow associated with the melting and crystallization of the polymer. The degree of crosslinking can be inferred from the changes in the melting and crystallization behavior of the polymer.

### MEASUREMENTS

The intrinsic viscosity of polyethylene is typically measured using a method described in the ISO 1628-3 standard. This involves dissolving the polymer in a suitable solvent and measuring the flow time of the solution through a capillary viscometer. The intrinsic viscosity is then calculated from the flow times of the polymer solution and the pure solvent.

Gel Permeation Chromatography (GPC) is a technique used to determine the molecular weight distribution of polymers. The ISO standard that describes the method for GPC measurement of polyethylene is ISO 16014. This standard outline the procedures for determining the molecular weight distribution and the average molecular weights of polymers using GPC.

GPC works by dissolving the polymer in a suitable solvent and passing the solution through a column packed with porous beads. The polymer molecules are separated based on their size, with larger molecules eluting first and smaller molecules eluting later. The elution profile is then analyzed to determine the molecular weight distribution of the polymer.

For measuring the impact resistance, the ASTM D256 standard test methods are commonly used. These methods cover the determination of the resistance of plastics to standardized pendulum-type hammers, mounted in standardized machines, in breaking standard specimens with one pendulum swing.

For measuring the Elongation at Break, the ISO 527 standard test methods are commonly used. These methods cover the determination of tensile properties of plastics, including the elongation at break, by subjecting the material to a uniaxial tensile force until it breaks.

For measuring the tensile strength of plastics, in general, the ISO 527 standard test methods are commonly used. These methods cover the determination of tensile properties of plastics, including tensile strength, by subjecting the material to a uniaxial tensile force until it breaks.

The melt enthalpy of polyethylene provides information about the amount of energy required to transition the material from a solid to a liquid state. In your document, the melt enthalpy is mentioned in the context of the visbreaking process of crosslinked polyethylene (PEX). This process aims to break the crosslinking bonds in the polyethylene chains to make the material recyclable.

The melt enthalpy is an important parameter that describes the thermal properties of polyethylene. It is often used to evaluate the crystallinity and thermal stability of the material. A higher melt enthalpy value indicates higher crystallinity, which is generally associated with better mechanical properties such as strength and stiffness.

### EXAM PLES

Provided are three samples, derived from crosslinked pipe recyclates, wherein visbreaking conditions were applied, varying in screw speed [rpm] of the extruder and specific energy intake into the material. The properties of the three samples of visbroken polyethylene are given in Table 1.

The properties for Sample 3, given in Table 1 show, that the highest MI2 and therefore the best result obtained by applying the visbreaking process, was achieved at a certain screw speed and a specific energy intake.

| TABLE 1 | | | |
|---|---|---|---|
| | **Sample 1** | **Sample 2** | **Sample 3** |
| Specific Energy [kWh/kg] | 0.5605 | 0.5555 | 0.5415 |
| MT2 [°C] | 342.5 | 341 | 344.5 |
| Overall troughput [kg/h] | 17 | 23 | 36 |
| Density [g/cm³] | 0.9502 | 0.9541 | 0.9569 |
| MI2 2.16kg [g/10min] | 0.06 | 0.37 | 2.52 |
| MI5 5kg [g/10min] | 0.34 | 1.64 | 7.98 |
| Intrinsic Viscosity [dL/g] | 1.44 | 1.28 | 1.04 |
| GPC Mw [g/mol] | 1.23E+05 | 9.76E+04 | 7.47E+04 |
| GPC Mn [g/mol] | 2.02E+04 | 1.51E+04 | 1.29E+04 |
| GPC Mz [g/mol] | 4.24E+05 | 3.52E+05 | 2.42E+05 |
| GPC Mw/Mn | 6.1 | 6.5 | 5.8 |
| Crystallization Temperature, DSC [°C] | 116.0 | 118.2 | 117.8 |
| Melting Temperature, DSC [°C] | 131.5 | 130.3 | 130.3 |
| Melting Enthalpy, DSC [J/g] | 198.1 | 204.8 | 207.5 |

In Table 2, the properties of the final composition are given, comprising a blend of 50/50 of visbroken crosslinked PE recyclate material and virgin HDPE component.

| TABLE 2 | | | |
|---|---|---|---|
| Composition | | | Final Composition |
| Components | visbroken PEX | virgin HDPE | - |
| ratio [wt%] | 50 | 50 | - |
| MI2 2.16kg/190°C [g/min] | 3.0 - 8.0 | - | - |
| Intrinsic viscosity [dL/g] | - | 5.5 - 7.5 | 1.2 - 3.7 |
| Mw/Mn | 4.0 - 6.0 | 7.5 - 9.5 | 10 - 30 |
| density [g/cm³] | 0.9520 - 0.9620 | 0.9250 - 0.9450 | 0.9450 - 0.9650 |

According to the invention, in Table 2 and 3 the properties of different compositions are given. Suitable blends of visbroken polyethylene recyclate and polyethylene of virgin origin may be blended, resulting in suitable compositions. So, components may be derived from different reaction processes, while such as autoclave, or slurry polymerization process or the like.

| TABLE 3 | | | | |
|---|---|---|---|---|
| | Visbroken recyclate | Component 1 | Component 2 | Final composition |
| | visbroken PEX | virgin HDPE | virgin HDPE | - |
| ratio [wt%] | 33.3 | 33.3 | 33.3 | - |
| MI2 2.16kg/190°C [dg/min] | 3.0 - 8.0 | - | 6.0 - 12.0 | - |
| Intrinsic Viscosity [dL/g] | - | 7.0 - 9.0 | - | 1.2 - 3.7 |
| Mw/Mn | 4.0 - 6.0 | 7.5 - 9.5 | 8.0 - 12.0 | 10 - 30 |
| Density [g/cm³] | 0.952 - 0.962 | 0.925 - 0.945 | 0.952 - 0.962 | 0.945 - 0.965 |

According to Table 3, also blend of at least two but also three components are within the scope of the present invention.

## Claims

1. A visbreaking process for obtaining a visbroken polyethylene comprising the steps of
a) Providing a crosslinked polyethylene recyclate,
b) Applying thermal and mechanical visbreaking conditions to the crosslinked polyethylene, in at least one extruder,
c) Adding a specific energy in a range from 0.50 to 0.60 kW/kg,
d) Obtaining the visbroken polyethylene.

2. The visbreaking process, according to claim 1, wherein the thermal and mechanical visbreaking conditions comprise a thermal treatment at a temperature in the range from 250°C to 400°C.

3. The visbreaking process, according to any of the preceding claims, wherein the crosslinked polyethylene recyclate is having
I. a density in the range from 0.940 to 0.965 g/cm³ (according to ISO 1183),
II. a MI2 in the range from 0.10 to 3.0 g/10 min (according to ISO 1133, 190°C, 2.16 kg).

4. The visbreaking process, according to any of the preceding claims, wherein the crosslinked polyethylene recyclate is comprising
a) a crosslinked high density polyethylene recyclate present in an amount in a range from 50 to 100 wt%,
b) a polypropylene in an amount present in a range from 1.0 to 10.0 wt%,
c) wherein components a) and b) sums up to 100 %,
d) optionally comprising a component c).

5. The visbreaking process according to any of the preceding claims, wherein visbroken polyethylene recyclate is having
a) a density in the range from 0.950 to 0.965 g/cm³ (according to ISO 1183),
b) a MI2 in the range from 1.0 to 15.0 g/10 min (according to ISO 1133, 190°C, 2.16 kg),
c) a Mw in a range from 70,000 to 150,000 g/mol,
d) the ratio Mw/Mn in the range from 1 to 10.

6. The visbroken polyethylene recyclate, according to any of the preceding claims, having
I. a density in the range from 0.950 to 0.965 g/cm³ (according to ISO 1183),
II. an intrinsic viscosity in the range from 0.8 to 2.0 dL/g,
III. a MI2 in the range from 1.0 to 15.0 g/10 min (according to ISO 1133, 190°C, 2.16 kg),
IV. a Mw in the range from 70,000 to 150,000 g/mol (according to ISO 16014),
V. a Mw/Mn in the range from 1 to 10.

7. A composition, comprising a blend or compound of
a) the visbroken crosslinked polyethylene recyclate, according to any of the preceding claims, present in an amount in the range from 30 to 70 wt%, and
b) at least one polyethylene of virgin origin, present in an amount in the range from 70 to 30 wt%,
c) and optionally additives, such as UV stabilizers and the like present in an amount in the range from 0 to 10 wt%, based on the overall composition.

8. The composition, according to any of the preceding claims, having
I. a density in the range from 0.925 to 0.970 g/cm³ (according to ISO 1183),
II. an intrinsic viscosity in the range from 1.0 to 5.0 dL/g,
III. a ratio of Mw/Mn in the range from 5 to 40.

9. The composition, according to any of the preceding claims, wherein the polyethylene of virgin origin is having
I. a density in the range from 0.920 to 0.965 g/cm³ (according to ISO 1183),
II. an intrinsic viscosity in the range from 1.0 to 10.0 dL/g,
III. is a co-polymer, of ethylene and 1-hexene, 1-butene or 1-octen,
IV. a ratio of Mw/Mn in the range from 5.0 to 15.0.

10. The composition obtained by a method of making such composition, comprising:
a) 50 to 100 wt. %, based on the total weight of the composition, of a crosslinked recyclate polyethylene having:
i. a density in the range from 0.950 to 0.965 g/cm³ (according to ISO 1183),
ii. an intrinsic viscosity in the range from 0.8 to 2.0 dL/g,
iii. a MI2 in the range from 1.0 to 15.0 g/10 min (according to ISO 1133, 190°C, 2.16 kg),
iv. a Mw in the range from 70,000 to 150,000 g/mol (according to ISO 16014),
v. a Mw/Mn in the range from 1 to 10.
b) 30 to 95 wt. %, based on the total weight of the composition, of a visbroken polyethylene that is derived from the crosslinked recyclate polyethylene having:
i. a density in the range from 0.950 to 0.965 g/cm³ (according to ISO 1183),
ii.a MI2 in the range from 1.0 to 15.0 g/10 min (according to ISO 1133, 190°C, 2.16 kg),
iii.a Mw in a range from 70,000 to 150,000 g/mol,
iv.the ratio Mw/Mn in the range from 1 to 10.

11. A visbroken polymeric material obtained from crosslinked recyclate derived polyethylene, wherein the crosslinked polyethylene chains are broken during the visbreaking process, resulting in a high melt flow rate and improved mechanical properties, wherein the visbroken polymeric material is having
a. a density in the range from 0.935 to 0.970 g/cm³ (according to ISO 1183),
b. an intrinsic viscosity in the range from 1.0 to 5.0 dL/g,
c. a ratio of Mw/Mn in the range from 5 to 40.

12. A visbroken polyethylene recyclate, obtainable by the process according to any of the preceding claims.

13. Use of the composition, according to any of the preceding claims, for pipe applications.

14. An article comprising the composition according to any of the preceding claims.

15. Polymeric material, having
a. a density in the range from 0.935 to 0.970 g/cm³ (according to ISO 1183),
b. an intrinsic viscosity in the range from 1.0 to 5.0 dL/g,
c. a ratio of Mw/Mn in the range from 5 to 40.
